# EUROPÄISCHE PATENTANMELDUNG

(11) **EP 0 748 059 A2**
(43) Veröffentlichungstag der Anmeldung: **11.12.1996**
(21) Anmeldenummer: 96108203.9
(22) Anmeldetag: 23.05.1996
(51) Int. Cl.: H04B 1/10

(54) **Hochfrequenz-Eingangsschaltung**

(30) Priorität: 07.06.1995 DE 19520691
(71) Anmelder: DEUTSCHE THOMSON-BRANDT GMBH, 78048 Villingen-Schwenningen (DE)
(72) Erfinder: Porges, Ivan, 78050 Villingen-Schwenningen (DE)

(57) **Zusammenfassung**

Empfänger für digitale Signale müssen mit kleineren Feldstärken bei den Nutzsignalen auskommen. Durch benachbarte, stärkere analoge Störsignale kann Intermodulation auftreten.

Intermodulationsstörungen, die durch Instabilität eines Mischer-Oszillators (5) aufgrund durchschlagender starker benachbarter Störsignale entstehen, werden durch ein einer Hochfrequenz-Vorverstärkerstufe (3) vorgeschaltetes Filter (6) beseitigt, das mit der Oszillator-Frequenz zusammenfallende Frequenzkomponenten benachbarter Störsignale dämpft.

Anwendbar bei digitalen Systemen, wie DAB und DVB.

## Beschreibung

Die Erfindung betrifft eine Hochfrequenz-Eingangsschaltung nach dem Oberbegriff des Anspruchs 1.

Da neue digitale Systeme für Rundfunk- und Fernsehsendungen mit kleineren Feldstärken auskommen, als dies bei analogen Systemen der Fall ist, liegen am Hochfrequenz-Eingang eines Empfängers, also dem Antennen- oder Kabeleingang, schwache Nutzsignale und vergleichsweise stärkere analoge Störsignale an. Die analogen Störsignale werden durch bestehende analoge Rundfunk- oder Fernsehsender verursacht.

Es hat sich gezeigt, daß bei Vorhandensein starker analoger Störsignale neben schwachen digitalen Nutzsignalen im Empfänger für die digitalen Signale Intermodulationsstörungen auftreten.

Der Erfindung liegt die Aufgabe zugrunde, eine Hochfrequenz-Eingangsschaltung dahingehend zu verbessern, daß Intermodulationsstörungen durch starke, neben der Nutzfrequenz liegende analoge Signale beseitigt werden.

Diese Aufgabe wird bei einer Hochfrequenz-Eingangsschaltung nach dem Oberbegriff des Anspruchs 1 durch die im Kennzeichen angegebenen Merkmale gelöst.

Der Erfindung liegt die Erkenntnis zugrunde, daß beim Empfang schwacher digitaler Signale starke benachbarte analoge Signale zum Mischer-Oszillator durchschlagen und dessen Stabilität beeinflussen. An den Störungen des Mischer-Oszillators ist allerdings nicht das gesamte Spektrum der analogen Störsignale gleichermaßen beteiligt, sondern vorwiegend nur diejenigen Frequenzkomponenten, die der aktuellen Mischer-Oszillator-Frequenz unmittelbar benachbart sind oder mit ihr zusammenfallen.

Aufgrund dieser Erkenntnis kommt die Erfindung zu der Lösung, nur die im Bereich der Mischer-Oszillator-Frequenz liegenden Eingangsspannungen zu dämpfen und das übrige Frequenzspektrum unbeeinflußt zu lassen. Dadurch ist der Aufbau eines die Dämpfung bewirkenden Filters einfach und kostengünstig. Ebenso ist eine variable Abstimmung des Filters auf die jeweils aktuelle Oszillator-Frequenz im Falle eines variablen Mischer-Oszillators in einfacher Weise möglich.

Durch die Beschränkung der Filterdurchlaßcharakteristik auf die Mischer-Oszillator-Frequenz wird außerdem eine dämpfende oder verzerrende Beeinflussung des Nutzfrequenzbereichs vermieden, was bei den vergleichsweise geringen Feldstärken von digitalen Nutzsignalen von großem Vorteil ist. Ein weiterer Vorteil ist eine erzielte Dämpfung der Oszillatorleistung an der Antennenbuchse.

Bei einer praktischen Realisierung kann das Filter als im Signalweg liegender Sperrkreis, als zwischen dem Signalweg und Bezugspotential liegender Saugkreis oder durch eine Kombination von Sperrkreis und Saugkreis ausgeführt sein.

Die technisch einfachste Lösung bildet dabei einen zwischen dem Signalweg und Bezugspotential liegenden Saugkreis, da im Falle eines abstimmbaren Saugkreises das variable Element, z.B. eine Kapazitätsdiode, am kalten Ende angeordnet werden kann und somit für die Abstimmspannung auf einem definierten Potential liegt.

Vorzugsweise ist das Filter zwischen dem Vorkreis und der Hochfrequenz-Vorverstärkerstufe angeordnet.

Durch die Anordnung des Filters unmittelbar vor der Hochfrequenz-Vorverstärkerstufe ist das Störsignal soweit abgeschwächt, daß die Entstehung zusätzlicher Störsignale durch nichtlineare Eigenschaften der Hochfrequenz-Vorverstärkerstufe weitestgehend vermieden wird.

Weiterhin kann das Filter als Kerbfilter hoher Filtergüte ausgebildet sein. Ein solches Filter bewirkt eine starke Dämpfung auf seiner Resonanzfrequenz und verhält sich sehr schmalbandig, so daß weiter von der Resonanzfrequenz entfernt liegende Signale nicht in unerwünschter Weise gedämpft werden.

Nachfolgend wird die Erfindung anhand zweier Ausführungsbeispiele erläutert. In der Zeichnung zeigen:
- Fig. 1: eine erste Ausführung der Hochfrequenz-Eingangsschaltung und
- Fig. 2: eine zweite Ausführung der Hochfrequenz-Eingangsschaltung.

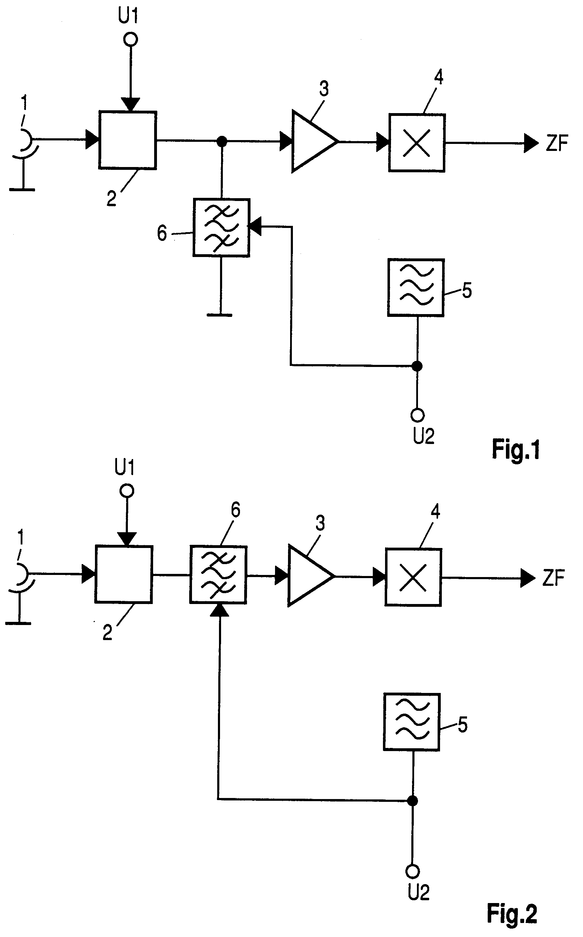

Die Schaltungen gemäß Fig. 1 und 2 umfassen einen Vorkreis 2 mit einem Antenneneingangsanschluß 1, eine Hochfrequenz-Vorverstärkerstufe 3, eine anschließende Mischstufe 4 und einen der Mischstufe zugeordneten Mischer-Oszillator 5.

Ferner ist zwischen dem abstimmbaren Vorkreis 2 und der Hochfrequenz-Vorverstärkerstufe 3 ein abstimmbares Filter 6 angeordnet. In Fig. 1 liegt dieses Filter 6 zwischen dem Signalweg und Bezugspotential und ist als Saugkreis ausgebildet, während in Fig. 2 das Filter 6 im Signalweg liegt und als Sperrkreis ausgebildet ist.

Der abstimmbare Vorkreis 2 ist jeweils über eine Steuerspannung U1 auf die aktuelle Nutzfrequenz abstimmbar, während das Filter 6 zusammen mit dem Mischer-Oszillator 5 über eine Abstimmspannung U2 auf die Mischer-Oszillator-Frequenz abstimmbar ist. Das Filter ist jeweils als schmalbandiges Kerbfilter hoher Güte aufgebaut.

Über den Antennenanschluß 1 gelangen Eingangssignale zunächst zum auf die Nutzfrequenz abgestimmten Vorkreis 2, der bereits eine Vorselektion der Nutzsignale durchführt und die außerhalb seines Durchlaßbereichs liegenden Signale dämpft. Das anschließende, auf die Mischer-Oszillator-Frequenz abgestimmte Filter 6 dämpft in einem schmalbandigen Bereich diejenigen Frequenzkomponenten benachbarter Störsignale, die mit der Mischer-Oszillator-Frequenz zusammenfallen. Dadurch sind die auf die Mischer-Oszillator-Frequenz entfallenden Störfrequenz-Komponenten so stark gedämpft, daß sie nicht mehr bis zum Mischer-Oszillator 5 durchschlagen können und dessen Frequenz in unerwünschter Weise mitziehen oder modulieren.

Die Nutzsignale werden nach Verstärkung in der Hochfrequenz-Vorverstärkerstufe 3 der Mischstufe 4 zugeführt und nach Mischung mit der nunmehr stabilen Mischer-Oszillator-Frequenz des Mischer-Oszillators 5 auf eine Zwischenfrequenz ZF umgesetzt und sind am Ausgang der Mischstufe 4 abgreifbar. Die Zwischenfrequenz kann in üblicher Weise einem Zwischenfrequenzverstärker und Demodulator zugeführt werden.

## Patentansprüche

1. Hochfrequenz-Eingangsschaltung, die einen auf eine Empfangsfrequenz abstimmbaren Vorkreis (2), eine Hochfrequenz-Vorverstärkerstufe (3), eine Mischstufe (4) und einen der Mischstufe (4) zugeordneten Mischer-Oszillator (5) umfaßt, **dadurch gekennzeichnet**, daß vor der Hochfrequenz-Vorverstärkerstufe (3) ein auf die Mischer-Oszillator-Frequenz abstimmbares Filter (6) zur Dämpfung von auf der Mischer-Oszillator-Frequenz liegenden Eingangsspannungen angeordnet ist.

2. Hochfrequenz-Eingangsschaltung nach Anspruch 1, **dadurch gekennzeichnet**, daß das Filter (6) als im Signalweg liegender Sperrkreis ausgebildet ist.

3. Hochfrequenz-Eingangsschaltung nach Anspruch 1, **dadurch gekennzeichnet**, daß das Filter (6) als zwischen dem Signalweg und Bezugspotential liegender Saugkreis ausgebildet ist.

4. Hochfrequenz-Eingangsschaltung nach Anspruch 1, **dadurch gekennzeichnet**, daß das Filter (6) als Kombination eines im Signalweg liegenden Sperrkreises mit einem zwischen dem Signalweg und Bezugspotential liegenden Saugkreis ausgebildet ist.

5. Hochfrequenz-Eingangsschaltung nach einem der Ansprüche 1 bis 4, **dadurch gekennzeichnet**, daß das Filter (6) zwischen dem Vorkreis (2) und der Hochfrequenz-Vorverstärkerstufe (3) angeordnet ist.

6. Hochfrequenz-Eingangsschaltung nach einem der Ansprüche 1 bis 5, **dadurch gekennzeichnet**, daß das Filter (6) als Kerbfilter hoher Filtergüte ausgebildet ist.
